# EUROPÄISCHE PATENTSCHRIFT

(11) **EP 0 776 156 B1**
(45) Veröffentlichungstag und Bekanntmachung des Hinweises auf die Patenterteilung: **12.08.1998**
(21) Anmeldenummer: 95919445.7
(22) Anmeldetag: 12.05.1995
(51) Int. Cl.: A01J 7/02

(54) **VORRICHTUNG ZUR SPÜLUNG VON MELKANLAGEN**
DEVICE FOR RINSING MILKING INSTALLATIONS
DISPOSITIF DE RINCAGE D'INSTALLATIONS DE TRAITE

(30) Priorität: 18.08.1994 DE 4429349
(43) Veröffentlichungstag der Anmeldung: 04.06.1997
(73) Patentinhaber: WESTFALIA SEPARATOR AG, 59302 Oelde (DE)
(72) Erfinder: BÜCKER, Heinrich, D-33449 Langenberg (DE)
(86) Internationale Anmeldenummer: EP9501798
(87) Internationale Veröffentlichungsnummer: WO9605724

(56) Entgegenhaltungen:
- DE-A- 2 727 337

## Beschreibung

Die Erfindung bezieht sich auf eine Vorrichtung zur Spülung von Melkanlagen, mit einem in einem Spülautomaten vorgesehenen Ausgleichbehälter, der zur Erzeugung eines Spülkreislaufes über eine Ablaufleitung und eine Zulaufleitung mit der Melkanlage verbindbar ist und in dem eine Heizvorrichtung zur Erwärmung der Spüllösung vorgesehen ist.

Eine derartige Vorrichtung ist beispielsweise aus der DE 27 27 337 C3 bekannt. Bei dieser Vorrichtung muß unmittelbar beim Spülvorgang die zur Erhitzung und Aufrechterhaltung der Temperatur der Spüllösung erforderliche elektrische Leistung beim Durchlauf der Spüllösung durch den Ausgleichbehälter von der Heizvorrichtung erzeugt werden. Die Leistung der Heizvorrichtung muß daher entsprechend den zu erwartenden Wärmeverlusten in der Melkanlage ausgelegt werden, um die erforderliche Spültemperatur zu erreichen. Die relativ hohen elektrischen Leistungen derartiger Heizvorrichtungen verursachen wegen des zunehmend verlangten Leistungspreises für die Vorhaltung der Kraftwerksleistung für Spitzenlasten hohe Kosten. Außerdem steht in ländlichen Räumen die erforderliche Leistung wegen mangelnder Stromnetzauslegung oft nicht zur Verfügung.

Der Erfindung liegt die Aufgabe zugrunde, ein Vorrichtung zur Kreislaufspülung von Melkanlagen zu schaffen, bei der die erforderliche elektrische Leistung der Heizvorrichtung erheblich verringert wird.

Diese Aufgabe wird dadurch gelöst, daß der Ausgleichbehälter über eine mit einer Umwälzpumpe versehenen Saugleitung mit einem Stapelbehälter verbunden ist und die Ablaufleitung und die Zulaufleitung mit dem Stapelbehälter über eine Leitung verbindbar sind.

Der Stapelbehälter ermöglicht die Vorlage einer für den Spülvorgang ausreichend großen Menge Spüllösung. Die Umwälzpumpe sorgt mit einer geringen Pumpleistung für den Kreislauf der Spüllösung vom Stapelbehälter zum Ausgleichbehälter und wieder zurück zum Stapelbehälter, wobei die Spüllösung allmählich durch die Heizvorrichtung auf die für den Spülvorgang erforderliche Temperatur erhitzt wird. Da zwischen den Spülvorgängen große zeitliche Abstände bestehen, kann eine Heizvorrichtung mit relativ geringer elektrischer Leistung vorgesehen werden.

Gemäß einer vorteilhaften Ausgestaltung ist der Stapelbehälter mit einer allseitigen Wärmeisolierschicht versehen. Dadurch werden die Wärmeverluste während des Aufheizens der Spüllösung reduziert und folglich die erforderliche Heizleistung verringert.

Bei einer weiteren vorteilhaften Ausgestaltung ist die elektrische Leistung der Heizvorrichtung erheblich geringer als die zur Aufrechterhaltung der Temperatur der Spüllösung während der Spülung erforderliche Leistung. Damit wird die erforderliche elektrische Leistung weiter verringert. Der Temperaturabfall der Spüllösung während des Spülvorganges kann dabei durch eine höhere Anfangstemperatur kompensiert werden.

Bei einer weiteren vorteilhaften Ausgestaltung ist der Stapelbehälter nur an seiner Oberseite mit Anschlußöffnungen zur Durchführung von Leitungen versehen. Ein Verlust an gestapelter Spüllösung durch Leckagen an Ventilen und Leitungsverbindungen wird dadurch vermieden.

Bei einer weiteren vorteilhaften Ausgestaltung ist die Saugleitung innerhalb des Ausgleichbehälters als Saugheber ausgebildet. Die Saugleitung dient hierbei gleichzeitig als Rücklaufleitung, wobei nur an dieser Leitung Wärmeverluste entstehen können.

Eine weitere vorteilhafte Ausgestaltung ist dadurch gekennzeichnet, daß die Saugleitung mit einem Isoliermantel versehen ist. Dadurch werden die Wärmeverluste an der Saugleitung weiter reduziert.

Gemäß einer weiteren vorteilhaften Ausgestaltung ist die Umwälzpumpe unterhalb des Flüssigkeitsniveaus im Stapelbehälter in der Saugleitung vorgesehen. In diesem Fall muß keine selbstansaugende Pumpe verwendet werden, wodurch eine preisgünstigere Lösung möglich wird.

Ausführungsbeispiele der Erfindung sind in der Zeichnung dargestellt und werden nachstehend näher erläutert. Es zeigt
- Fig. 1: eine schematische Darstellung der Vorrichtung
- Fig. 2: die Vorrichtung mit einer als Saugheber ausgebildeten Saugleitung.

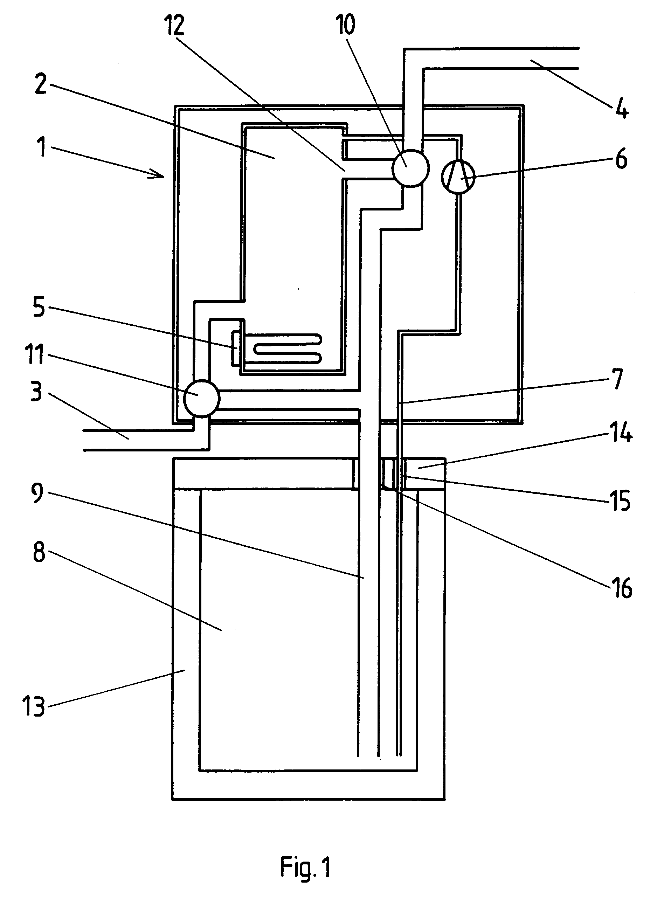

In der Fig. 1 ist mit 1 der Spülautomat bezeichnet, dessen Ausgleichbehälter 2 zur Erzeugung eines Spülkreislaufes über eine Ablaufleitung 3 und eine Zulaufleitung 4 mit einer Melkanlage verbindbar und in dem eine Heizvorrichtung 5 zur Erwärmung einer Spüllösung vorgesehen ist. Der Ausgleichbehälter 2 ist über eine mit einer Umwälzpumpe 6 versehenen Saugleitung 7 mit einem Stapelbehälter 8 verbunden und die Ablaufleitung 3 und die Zulaufleitung 4 sind mit dem Stapelbehälter 8 über eine Leitung 9 durch entsprechende Stellung von Ventilen 10 und 11 verbindbar. Die Zulaufleitung 4 mündet in eine Öffnung 12 im oberen Bereich des Ausgleichbehälters 2. Der Stapelbehälter 8 ist mit einer allseitigen Wärmeisolierschicht 13 versehen und besitzt an an seiner Oberseite 14 Anschlußöffnungen 15 und 16 zur Durchführung der Leitungen 7 und 9.

Vor dem Spülvorgang wird zunächst der Stapelbehälter 8 mit der Spüllösung gefüllt. Dabei kann es sich um frisch angesetzte Spüllösung oder um Spüllösung vom letzten Spülgang des vorhergehenden Spülzyklusses handeln. Über die Saugleitung 7 und die Umwälzpumpe 6 wird die Spüllösung in den Ausgleichbehälter 2 gefördert, in dem sie bis zur Öffnung 12 ansteigt, um dann über das Ventil 10 und die Leitung 9 in den Stapelbehälter 8 zurückzufließen. Dabei wird die Spüllösung allmählich durch die Heizvorrichtung 5 im Ausgleichbehälter 2 auf eine höhere als zum Spülen notwendigen Temperatur erhitzt. Nach Erreichen der gewünschten Temperatur wird durch entsprechende Stellung des Ventils 11 die Leitung 9 mit der Ablaufleitung 3 verbunden und die Spüllösung dadurch in eine nicht dargestellte Melkanlage gesaugt. Nach dem Entleeren des Stapelbehälters 8 werden über die Ventile 10 und 11 die Ablaufleitung 3 und die Zulaufleitung 4 mit dem Ausgleichbehälter 2 verbunden, so daß die über die Zulaufleitung 4 aus der Melkanlage in den Ausgleichbehälter 2 zurückgeleitete Spüllösung wiederholt über die Ablaufleitung 3 in den Spülkreislauf gegeben wird. Bis zum Ende des Spülvorganges kühlt sich die Spüllösung dabei durch Wärmeverluste in der Melkanlage von der erhöhten Temperatur bis auf eine erforderliche Mindesttemperatur ab. Durch Hinzuschaltung der Heizvorrichtung 5 kann der Temperaturabfall verringert werden.

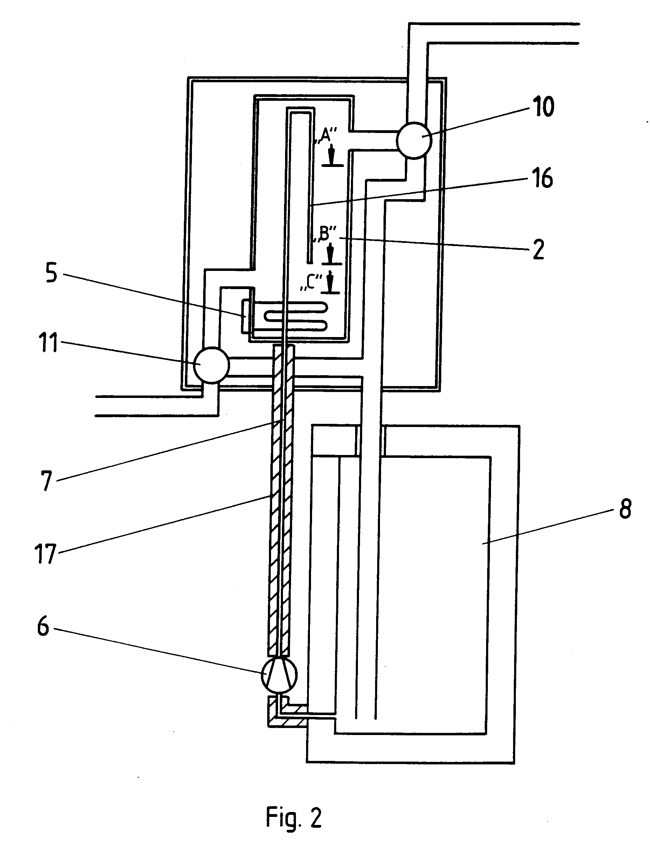

Bei der Ausführung gemäß Fig. 2 ist die Saugleitung 7 innerhalb des Ausgleichbehälters 2 als Saugheber 16 ausgebildet. Außerhalb des Ausgleichbehälters 2 ist die Saugleitung 7 mit einem Isoliermantel 17 umgeben, der einen geringen Wärmeverlust gewährleistet. Die Umwalzpumpe 6 ist unterhalb des Flüssigkeitsniveaus im Stapelbehälter 8 vorgesehen, so daß keine selbstansaugende Pumpe erforderlich ist.

Die Umwälzpumpe 6 fördert die Spüllösung vom Stapelbehälter 8 über die Saugleitung 7 in den Ausgleichbehälter 2 bis zum Niveau "A".

Über einen nicht dargestellten Niveauschalter wird die Umwälzpumpe 6 bei Erreichen des Niveaus "A" abgeschaltet, wodurch die Spülflüssigkeit durch den Saughebereffekt der Saugleitung 7 zurück in den Stapelbehälter 8 strömt, bis das Niveau "B" im Ausgleichbehälter 2 erreicht ist und die Umwälzpumpe 6 erneut eingeschaltet wird.

Die Heizvorrichtung 5 wird dabei solange zugeschaltet, wie das Niveau "C" im Ausgleichbehälter 2 überschritten und die gewünschte Temperatur unterschritten ist, so daß sich die Spüllösung im Stapelbehälter 8 langsam aufheizt.

Die Förderleistung der Umwälzpumpe 6 wird vorzugsweise so niedrig ausgelegt, daß zum Füllen des Ausgleichbehälters 2 eine Zeit benötigt wird, die der Leistung der Heizvorrichtung 5 zum Aufheizen der zugeführten Flüssigkeitsmenge auf die Solltemperatur entspricht. Der Rückfluß der Spülflüssigkeit vom Ausgleichbehälter 2 in den Stapelbehälter 8 über die Saugleitung 7 erfolgt durch die vorhandene Druckhöhe entsprechend schneller, so daß ein zügiger Austausch der Spülflüssigkeit stattfindet. Durch die hohe Rückströmgeschwindigkeit wird die erwärmte Spülflüssigkeit im Stapelbehälter 8 nach oben geleitet, während anschließend kältere Spülflüssigkeit aus den unteren Bereich zum Aufheizen hochgefördert wird.

Nach Erreichen der gewünschten Temperatur wird durch entsprechende Betätigung der Ventile 10 und 11 der Spülvorgang wie oben beschrieben durchgeführt.

## Patentansprüche

1. Vorrichtung zur Spülung von Melkanlagen, mit einem in einem Spülautomaten (1) vorgesehenen Ausgleichbehälter (2), der zur Erzeugung eines Spülkreislaufes über eine Ablaufleitung (3) und eine Zulaufleitung (4) mit der Melkanlage verbindbar ist und in dem eine Heizvorrichtung (5) zur Erwärmung der Spüllösung vorgesehen ist, **dadurch gekennzeichnet**, daß der Ausgleichbehälter (2) über eine mit einer Umwälzpumpe (6) versehenen Saugleitung (7) mit einem Stapelbehälter (8) verbunden ist und die Ablaufleitung (3) und die Zulaufleitung (4) mit dem Stapelbehälter (8) über eine Leitung (9) verbindbar sind.

2. Vorrichtung nach Anspruch 1, dadurch gekennzeichnet, daß der Stapelbehälter (8) mit einer allseitigen Wärmeisolierschicht (13) versehen ist.

3. Vorrichtung nach Anspruch 1 oder 2, dadurch gekennzeichnet, daß die elektrische Leistung der Heizvorrichtung (5) erheblich geringer ist als die zur Aufrechterhaltung der Temperatur der Spüllösung während der Spülung erforderliche Leistung.

4. Vorrichtung nach einem der Ansprüche 1 bis 3, dadurch gekennzeichnet, der Stapelbehälter (8) nur an seiner Oberseite (14) mit Anschlußöffnungen (15, 16) zur Durchführung von Leitungen (7, 9) versehen ist.

5. Vorrichtung nach einem der Ansprüche 1 bis 3, dadurch gekennzeichnet, daß die Saugleitung (7) innerhalb des Ausgleichbehälters (2) als Saugheber (16) ausgebildet ist.

6. Vorrichtung nach Anspruch 5, dadurch gekennzeichnet, daß die Saugleitung (7) mit einem Isoliermantel (17) versehen ist.

7. Vorrichtung nach Anspruch 5 oder 6, dadurch gekennzeichnet, daß die Umwälzpumpe (6) unterhalb des Flüssigkeitsniveaus im Stapelbehälter (8) in der Saugleitung (7) vorgesehen ist.

## Claims

1. Device for rinsing milking installations with an equalising reservoir (2) situated in an automatic rinsing system (1), said equalising reservoir (2) being connectable to the milking installation via a discharge line (3) and a feed line (4) for the purpose of producing a rinsing circuit and in which a heating device (5) is provided for heating the rinsing solution, **characterised in that** the equalising reservoir (2) is connected to a storage vessel (8) via a suction line (7) provided with a circulation pump (6) and that the discharge line (3) and the feed line (4) can be connected to the storage vessel (8) via a line (9).

2. Device according to claim 1, characterised in that the storage vessel (8) is provided with a heat insulating layer (13) on all sides.

3. Device according to claim 1 or 2, characterised in that the electrical power of the heating device (5) is substantially lower than the power required to maintain the temperature of the rinsing solution during rinsing.

4. Device according to one of the claims 1 to 3, characterised in that the storage vessel (8) is provided with connecting orifices (15, 16) only on its upper side that serve as a leadthrough for lines (7, 9).

5. Device according to one of the claims 1 to 3, characterised in that the suction line (7) inside the equalising reservoir (2) is designed as a siphon (16).

6. Device according to claim 5, characterised in that the suction line (7) is provided with an insulating jacket (17).

7. Device according to claim 5 or 6, characterised in that the circulation pump (6) is situated beneath the liquid level in the storage vessel (8) in the suction line (7).

## Revendications

1. Dispositif de lavage pour installations de traite, comportant un automate de lavage (1) dans lequel est disposé un bac tampon (2) qui, dans le but de former un circuit de lavage, peut être relié à l'installation de traite par l'intermédiaire d'une conduite d'écoulement (3) et d'une conduite d'alimentation (4), et qui possède un dispositif de chauffage (5) destiné à réchauffer la solution détergente, **caractérisé en ce que** le bac tampon (2) est relié à un récipient de stockage (8) via une conduite d'aspiration (7) munie d'une pompe de circulation (6), et que la conduite d'écoulement (3) et la conduite d'alimentation (4) peuvent être reliées au récipient de stockage (8) par l'intermédiaire d'une conduite (9).

2. Dispositif selon revendication 1, caractérisé en ce que le récipient de stockage (8) est renfermé, de tous les côtés, d'une couche thermo-isolante (13).

3. Dispositif selon l'une des revendications 1 ou 2, caractérisé en ce que la puissance électrique du dispositif de chauffage (5) est beaucoup plus faible que celle nécessaire à maintenir la température de la solution détergente au cours du lavage.

4. Dispositif selon l'une des revendications 1 à 3, caractérisé en ce que seul la surface supérieure (14) du récipient de stockage (8) est munie d'ouvertures de raccordement (15, 16) permettant le passage de conduites (7, 9).

5. Dispositif selon l'une des revendications 1 à 3, caractérisé en ce que, à l'intérieur du bac tampon (2), la conduite d'aspiration (7) est posée en tant que siphon (16).

6. Dispositif selon revendication 5, caractérisé en ce que la conduite d'aspiration (7) est munie d'une gaine isolante (17).

7. Dispositif selon l'une des revendications 5 ou 6, caractérisé en ce que la pompe de circulation (6) incorporée dans la conduite d'aspiration (7) est disposée en-dessous du niveau de liquide dans le récipient de stockage (8).
